# EUROPÄISCHE PATENTSCHRIFT

(11) **EP 1 611 662 B1**
(45) Veröffentlichungstag und Bekanntmachung des Hinweises auf die Patenterteilung: **24.11.2010**
(21) Anmeldenummer: 04724978.4
(22) Anmeldetag: 01.04.2004
(51) Int. Cl.: H02K 35/02, H01L 41/113, H01F 7/14, H01F 7/06

(54) **ELEKTROMAGNETISCHER ENERGIEWANDLER**
ELECTROMAGNETIC ENERGY CONVERTER
CONVERTISSEUR D'ENERGIE ELECTROMAGNETIQUE

(30) Priorität: 07.04.2003 DE 10315765
(43) Veröffentlichungstag der Anmeldung: 04.01.2006
(60) Teilanmeldung: 10182216.1
(73) Patentinhaber: EnOcean GmbH, 82041 Oberhaching (DE)
(72) Erfinder: SCHMIDT, Frank, 82054 Altkirchen (DE)
(74) Vertreter: Epping - Hermann - Fischer
(86) Internationale Anmeldenummer: PCT/DE2004/000681
(87) Internationale Veröffentlichungsnummer: WO 2004/093299

(56) Entgegenhaltungen:
- DE-A- 2 532 621
- GB-A- 1 312 927
- US-A- 3 928 988

## Beschreibung

Die Erfindung betrifft einen elektromagnetischen Energiewandler mit einem Permanentmagneten, einem weichmagnetischem Element, und einer elektrischen Spule.

Elektromagnetische Energiewandler sind in vielen verschiedenen Ausführungsformen bekannt. Beispielhaft seien hier genannt z.B. Generatoren oder Elektromotoren. Im Grunde ist jeder elektromagnetische Energiewandler zum Wandeln von mechanischer in elektrische, bzw. von elektrischer in mechanische Energie geeignet. Zumeist sind diese elektromagnetischen Energiewandler so ausgelegt, dass eine mechanische Energie in Form einer Drehbewegung durch den elektromechanischen Energiewandler in elektrische Energie gewandelt wird.

Solche elektromagnetischen Energiewandler haben die Aufgabe gemeinsam, beständig und über einen längeren Zeitraum elektrische Verbraucher mit Energie zu versorgen, oder beständig über einen längeren Zeitraum elektrische Energie in mechanische Energie zu wandeln. Je nach Anforderung sind dabei verschiedene Größen und Ausführungsformen bekannt. Als Grundregel kann dabei davon ausgegangen werden, dass die Wandlung von elektrischer in mechanische Energie bzw. von mechanischer in elektrische Energie mit zunehmender Größe des elektromagnetischen Wandlers mit höheren Wirkungsgraden, d.h. mit geringeren Verlusten zu bewerkstelligen ist. D.h. im Umkehrschluss, je kleiner ein elektromagnetischer Wandler sein soll, umso größer werden die im elektromagnetischen Wandler bedingten Anteile der Verlustenergie, bzw. umso geringer wird der Wirkungsgrad. Dies ist insbesondere für elektromagnetische Wandler von Bedeutung, die energieautarke Systeme mit elektrischer Energie versorgen, zum Beispiel Funkschalter oder Funksender, die über keine batteriebetriebene oder eine drahtgebundene Energieversorgung verfügen. So eingesetzte elektromagnetische Wandler müssen zum Zeitpunkt des Energiebedarfs ausreichend Energie zum Betrieb eines solchen Systems zur Verfügung stellen. Da die räumlichen Verhältnisse für solche Systeme oftmals stark begrenzt sind, so dass kleinste elektromagnetische Wandler eingesetzt werden müssen, kann auch von sehr geringen Wirkungsgraden nach der oben genannten Grundregel ausgegangen werden.

Die GB 1312927 beschreibt einen elektromagnetischen Energiewandler mit zumindest einem Permanentmagneten, einem weichmagnetischem Element, und einer elektrischen Spule, wobei durch den Permanentmagnet und das weichmagnetische Element ein magnetischer Kreis mit einer ersten Flussrichtung gebildet ist und die Spule einen Teil des magnetischen Kreises umschließt, wobei das weichmagnetische Element und der Permanentmagnet um eine Achse zueinander drehbar gelagert sind und durch Anschlagstellen Endpunkte einer damit möglichen Drehbewegung gebildet sind,

In der US 3.928.988 ist der elektromagnetische Antrieb einer Garnführung beschrieben. Dieser weist einen Kipphebel mit einem Permanentmagneten auf. Dieser wird wechselseitig von zwei abwechselnd betriebenen Elektromagneten angezogen, wodurch ein jeweiliges Kippen betrieben wird.

In der DE2532621 ist ein elektromagnetischer Signalgeber für den Bergbau beschrieben, der ein Signal erzeugt, das über eine Leitung einem elektromagnetischen Signalempfänger zugeführt wird. Diese bekannte Anordnung weist durch die leitungsgebundene Anordnung eine hohe Verlustleistung durch die Leitungswiderstände auf, was zu einem hohen Energiebedarf führt.

Somit liegt der Erfindung die Aufgabe zugrunde eine Anordnung vorzusehen, mit der energiesparend Signale übertragbar sind.

Diese Aufgabe wird erfindungsgemäß durch die in Patentanspruch 1 beschriebenen Maßnahmen gelöst, und durch die in den darauf rückbezogenen Unteransprüchen vorteilhaft erweitert.

Dabei ist ein elektromagnetischer Energiewandler vorgeschlagen mit zumindest einem Permanentmagneten, zumindest einem weichmagnetischen Element und zumindest einer elektrischen Spule, wobei durch den Permanentmagneten und das weichmagnetische Element ein magnetischer Kreis mit einer ersten Flussrichtung gebildet ist und die Spule einen Teil des magnetischen Kreises umschließt, wobei das weichmagnetische Element und der Permanentmagnet um eine Achse zueinander drehbar gelagert sind und durch Anschlagstellen Endpunkte einer mit der Achse möglichen Drehbewegung gebildet sind. Das Vorteilhafte an diesem elektromagnetischen Wandler ist, dass die Anzahl der bewegten Elemente gering ist, ebenso wie die Bewegung an sich eher gering ist, da sie nur eine vorbestimmte Wegstrecke in jeweils einer Richtung beschreibt, nämlich von Anschlagpunkt zu Anschlagpunkt. Rotationsbedingte Reibungsverluste durch beispielsweise Rollen- oder Kugel- oder Gleitlager, die hohe Drehzahlen über lange Zeit standhalten müssen, entfallen somit. Auch ist die Zahl der Bauteile für einen solchen Energiewandler denkbar klein, da im Grunde die oben genannten drei Bauteile, nämlich Permanentmagnet, weichmagnetisches Element und elektrische Spule und die verbindende Achse alle notwendigen Bauteile beschreiben. Aufwendige Stromabnahme und Übergabesysteme, wie Schleifkontakte, Kontaktkollektoren etc., sind nicht erforderlich, die damit verbundenen Reibungsverluste und Verschleißerscheinungen treten bei dem erfindungsgemäßen elektromagnetischen Wandler aus diesem Grund nicht auf.

Durch die Achse, mit der der Permanentmagnet und das weichmagnetische Element drehbar zueinander gelagert sind, wird im Zusammenhang mit den Anschlagstellen eine Umkehrung des magnetischen Flusses durch die elektrische Spule bewirkt. Durch die Anschlagstellen wird erreicht, dass die Umkehrung des magnetischen Flusses möglichst rasch, insbesondere schlagartig geschieht. Diese Eigenschaft trägt der Gesetzmäßigkeit Rechnung, dass die Geschwindigkeit der Änderung des magnetischen Flusses direkt proportional zur gewandelten elektrischen Energie ist. Die Spule, die dabei vorzugsweise um das weichmagnetische Element des Magnetkreises angeordnet ist, erhält dadurch die höchste Induktion. Dies ist besonders vorteilhaft dadurch bedingt, da diese hohe Induktion nicht durch ein Schließen oder Öffnen des Magnetkreises, sondern durch die Änderung der Richtung des Magnetkreises um den doppelten Betrag geändert wird. Die damit erzeugte rasche magnetische Flussänderung führt zu einer kurzzeitigen Spannungsinduktion in der Spule, und die damit erzeugte elektrische Energie kann mit Gleichrichtern vorzugsweise Halbleitermetallkontaktdioden gleichgerichtet und nach Zwischenspeicherung z.B. einen Kondensator zum kurzzeitigen Betrieb eines Funkschalters oder Funksensors genutzt werden.

Die Auslösung der Drehbewegung geschieht z.B. durch Einbringung einer zusätzlichen Kraft, beispielsweise durch einen Anwender. Liegt z.B. das weichmagnetische Element einem Ende an dem Nordpol des Permanentmagneten und mit dem anderen Ende an dem Südpol des Permanentmagneten, so wird diese Position durch die magnetische Kraft gehalten. Zur Betätigung des elektromagnetischen Energiewandlers muss diese magnetische Haltekraft überwunden werden. Dies geschieht durch Einbringen einer zusätzlichen Kraft von außen in der Drehrichtung, entgegen der magnetischen Haltekraft. Ist die eingebrachte Kraft größer als die magnetische Haltekraft, beginnt schlagartig eine Drehbewegung in Richtung der eingebrachten Kraft. Dabei wird 1. der bestehende Magnetkreis unterbrochen, und 2. beim Erreichen der Anschlagstellen der Magnetkreis in umgekehrter Richtung wieder geschlossen. Sind die Kontaktflächen an den Anschlagstellen direkt durch den Permanentmagnet und das weichmagnetische Element gebildet, so liegt dem magnetischen Fluss kein weiterer Widerstand entgegen, wie ihn beispielweise ein Luftspalt bilden würde, und eine maximale Änderung des magnetischen Flusses in einer extrem kurzen Zeit ist damit möglich.

Vorteilhaft sind zwei Endlagen der Drehbewegung gebildet, zwischen denen die Drehbewegung wie eine Art Wippbewegung stattfindet. Beide Endlagen stellen unterstützt durch die magnetischen Selbsthaltekräfte stabile Endlagen der möglichen Drehbewegung dar. Mit jedem Einbringen einer Kraft von außen in die jeweils der magnetischen Selbsthaltekraft entgegenwirkende Richtung, wird somit ein Umschnappen in schlagartiger Weise eingeleitet, und elektrische Energie erzeugt. Um den zeitlichen Ablauf vorteilhaft zu beeinflussen, ist es sinnvoll, den Winkel, den die Drehbewegung beschreibt, klein zu halten, so dass durch die Bewegung an sich die dafür aufgewendete Zeit möglichst gering ist. Der entscheidende Faktor in Bezug auf die Erzeugung der Menge an elektrischer Energie ist nicht die Wegstrecke der Drehbewegung, sondern im wesentlichen die zeitliche Änderung des magnetischen Flusses, der insbesondere durch die Umkehrung des magnetischen Flusses verstärkt wird.

In einer vorteilhaften Ausführungsform ist eine Ruhelage der Drehbewegung durch ein Federelement unterstützt und zwar derart, dass die zweite Ruhelage nach dem Erreichen durch Krafteinbringung von außen sofort wieder in die erste Ruhelage zurückschnappt, da die zweite Ruhelage durch die Kraft des Federelementes instabil gestaltet ist. Das heißt, die Betätigung des Energiewandlers durch Krafteinwirkung von außen entgegen der magnetischen Selbsthaltekraft und entgegen der Federkraft, bewirkt beim Überwinden der Selbsthaltekraft ein schlagartiges Umschnappen in die zweite Ruhelage. Getrieben durch die Federkraft wird ein ebenso schlagartiges Zurückschnappen in die erste Ruhelage erreicht. Die damit erzeugte elektrische Energie ist demzufolge die doppelte Menge, als durch ein einfaches Umschnappen von der ersten in die zeite Ruhelage.

Es ist eine Frage der Dimensionierung des Federelementes und auch eine Frage des besonderen Anwendungsfalles, welche der im Folgenden kurz beschriebenen ebenso vorteilhaften Ausführungsformen Anwendung findet.

So ist das Federelement zusammen mit den magnetischen Elementen so dimensionierbar, dass eine Drehbewegung aus der ersten Ruhe- oder der zweiten Ruhelage heraus durch die Kraft des Federelements unterstützt wird, womit eine geringere Krafteinwirkung von außen zur Betätigung des elektromagnetischen Wandlers erforderlich ist. Das heisst, das Federelement ist nicht stark genug dimensioniert, um diesen Prozess wieder umzukehren und somit einen zweifachen Energieertrag zu bewirken.

Anders könnte beispielsweise das Federelement so gestaltet sein, dass sich die Federkraft mit den magnetischen Kräften in einer Mittellage der Drehbewegung aufhebt und damit eine Energieerzeugung in Form eines Tastelementes in beiden Richtungen möglich ist. Die Menge der Energie ist damit selbstverständlich geringer, als in einer der vorgenannten Ausführungsformen, ist aber letztendlich auch hier eine Frage der Dimensionierung von Permanentmagnet, weichmagnetischem Element und Spule.

Die Spule ist vorteilhaft um das weichmagnetische Element angeordnet so dass das weichmagnetische Element einen Spulenkern bildet, da dort die größte Flussänderung durch den Permanentmagneten erreichbar ist. Eine Anordnung der Spule um den Permanentmagneten hätte bei weitem nicht diese Wirkung.

Da beide Elemente, Permanentmagnet und weichmagnetisches Element zueinander drehbar gelagert sind, bleibt es letztendlich dem Anwendungsfall überlassen, welches der beiden Elemente mit einem dritten Element, z.B. einem Gehäuse fest verbunden ist. Gegenüber diesem Gehäuse oder drittem Element stützt sich auch die Feder zur Ausübung ihrer Kraft ab. Auch ist eine Feder gewissermaßen als Spiralfeder so an den beiden Elementen anordenbar, dass die Kraft direkt zwischen den beiden Elementen wirkt. Entscheidend ist im Sinne der Erfindung, dass durch die Drehbewegung die möglichst kurz gestaltet werden soll, eine Änderung, insbesondere eine Umkehrung des magnetischen Flusses durch eine Spule erreicht wird. Die Schlagartigkeit dieser Änderung ist ausschlaggebend für die gewonnene elektrische Energie.

Als weichmagnetisches Material eignen sich dazu beispielsweise Eisenferrit, eine Nickel-Eisen-Legierung oder auch die sogenannten Elektro- oder Trafobleche. In den oben genannten Ausführungsbeispielen ist die Verwendung eines solchen elektromagnetischen Wandlers für Funkschalter oder Funksensoren, insbesondere aber für Funkschalter besonders vorteilhaft, da ein solcher elektromagnetischer Wandler zum Zeitpunkt des Betätigen des Funkschalters die Schaltbewegung zur Einleitung der Drehbewegung verwendet werden kann. Damit ist infolge der Drehbewegung eine Spannung induziert, die zur Energieversorgung des Funkschalters Verwendung findet.

Im Folgenden ist die Erfindung anhand eines Ausführungsbeispiels und drei Figuren näher erläutert. Es zeigt:
- Figur 1: einen elektromagnetischen Wandler in einer ersten Ruhelage,
- Figur 2: einen elektromagnetischen Wandler in einer zweiten Ruhelage,
- Figur 3: einen elektromagnetischen Wandler in einer anderen Ausführungsform.

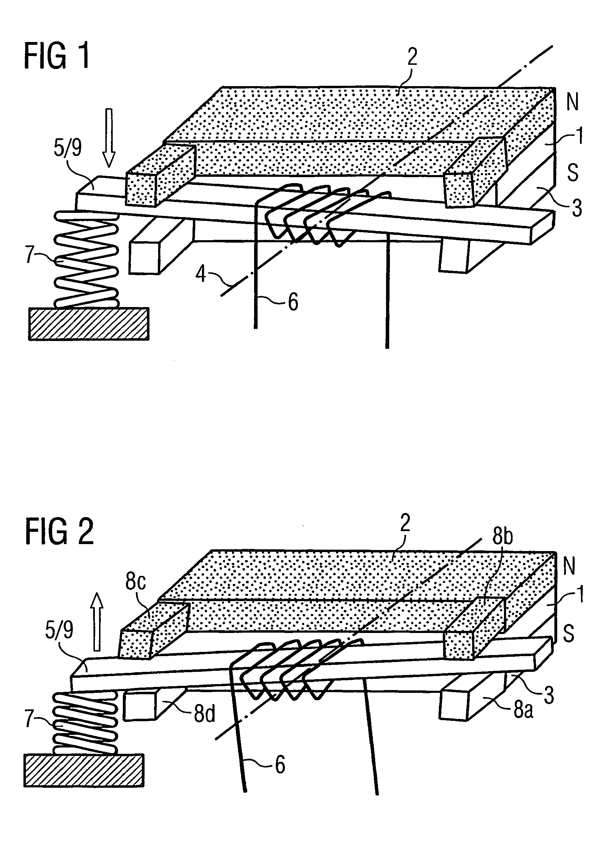

Figur 1 zeigt einen erfindungsgemäßen elektromagnetischen Wandler, bei dem ein Permanentmagnet 1 mit einer ersten Permanentmagnetschicht 2 und einer zweiten Permanentmagnetschicht 3 gebildet ist. Eine Achse 4 bildet die Drehachse, um diese herum die Drehbewegung stattfindet.
In dem Ausführungsbeispiel ist ein bewegliches Element 5 drehbar mit der Achse 4 gegenüber dem Permanentmagneten 1 gelagert. Um das bewegliche Element 5 ist zumindest teilweise eine elektrische Spule angeordnet, in die bei einer Änderung des magnetischen Flusses elektrischer Strom bzw. Spannung induziert wird. Ein Federelement 7 wirkt mit seiner Federkraft einer nach außen eingebrachten Kraft entgegen. Die von außen eingebrachte Kraft drückt dann entgegen der Federkraft nach unten und überwindet damit ab einer bestimmten Größe die magnetischen Haltekräfte, wodurch durch die von außen eingebrachte Kraft eine Drehbewegung eingeleitet wird, die schlagartig in die zweite Ruhelage überführt.

Diese zweite Ruhelage ist in Figur 2 dargestellt. An den Permanentmagneten sind Anschlagstellen 8a, 8b, 8c und 8d ausgebildet, die jeweils gegenüberliegend als Nord- und Südpol, ausgebildet sind. Somit ist die Drehbewegung nur innerhalb dieser Anschlagstellen möglich. Ein abruptes Anschlagen des beweglichen Elementes 5 an den Anschlagstellen 8a bis 8d bewirkt damit ein abruptes, ja schlagartiges, Ändern der magnetischen Flussrichtung in dem beweglichen Element 5. Vorteilhafterweise ist dieses bewegliche Element in dem Ausführungsbeispiel als weichmagnetisches Element 9 ausgebildet. Diese weichmagnetische Ausbildung ermöglicht ein schnelles Umorientieren der magnetischen Flussrichtung in dem beweglichen Element. Die Federkraft des Federelementes 7 ist so einstellbar, dass die in Figur 2 dargestellte zweite Ruhelage eine instabile Lage ist, und durch das Federelement das bewegliche Element 5 bzw. das weichmagnetische Element 9 wieder in die erste Ruhelage, so wie sie in Figur 1 dargestellt ist, zurückgetrieben wird. Dies ist ein Beispiel für das energieeffizienteste Ausführungsbeispiel.

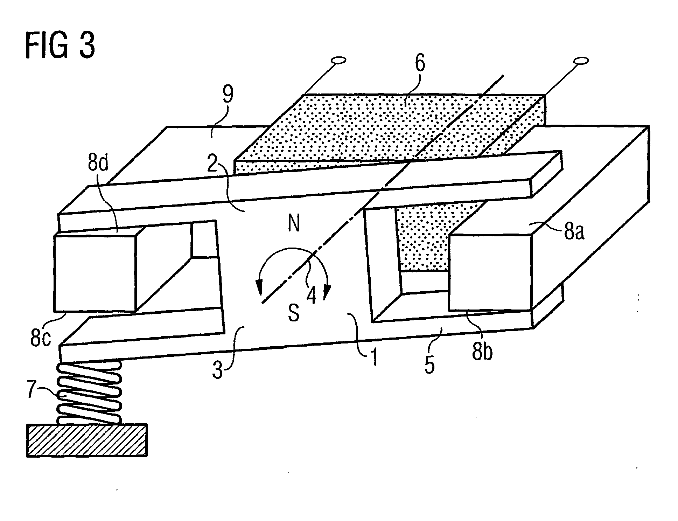

Der in Figur 3 in einer anderen Ausführungsform dargestellte Energiewandler zeigt eine andere konstruktive Ausführung des Permanentmagneten und des weichmagnetischen Elementes 9. Der Permanentmagnet 1 verfügt auch hier vorzugsweise über eine schichtartige Bildung, so dass eine erste
Permanentmagnetschicht 2 und eine zweite
Permanentmagnetschicht 3 gebildet sind. Die Achse 4 stellt auch hier die Drehachse dar, um der sich die beiden Elemente zueinander, insbesondere aber der Permanentmagnet innerhalb der durch die Anschlagstellen 8a bis 8d gebildeten Freiheitsgrade bzw. Winkelgrade drehbar gelagert ist. In diesem Falle ist das bewegliche Element 5 als Permanentmagnet ausgebildet und das weichmagnetische Element steht demgegenüber fest, was insbesondere auf die Kontaktstellen für die Spule 6 vorteilhaft ist, da diese Ausführungsform dann von längerer Lebensdauer ist, da mechanisch die elektrischen Kontaktstellen der Spule 6 nicht beansprucht sind.

Im Prinzip eignen sich beide Ausführungsformen besonders für die Verwendung bei Funkschaltern, die keine eigene Energieversorgung, sondern mit einem Schaltimpuls die Energieversorgung für ein Funksignal erhalten.

Mit einem Energiewandler, wie er hier vorgeschlagen ist, ist es möglich, bei Krafteinwirkung und zusätzlich beim Nachlassen der Kraft Energie zu wandeln. Des weiteren ist eine von der Betätigungsgeschwindigkeit unabhängige Mindestenergie zu wandeln, da selbst bei langsamem Einbringen der Kraft mit dem Zeitpunkt des Überschreitens der Haltekraft ein schlagartiges Umschlagen in die andere Ruhelage erfolgt. Damit sind auf einfache Weise Kippschalter sowie Taster realisierbar. Da abhängig von der Richtung, in der die Änderung des magnetischen Flusses erfolgt, auch die Polung der erzeugten elektrischen Energie unterschiedlich ist, ist diese Information zusätzlich in einem Funkschalter verwendbar, um z.B. zwei verschiedene Funktionen eines Funkschalters voneinander getrennt abbilden zu können.

Wird Kraft auf dieses bewegliche Teil ausgeübt, passiert solange nichts, bis die durch den Permanentmagneten hervorgerufene Haltekraft des beweglichen Teils überschritten wird. Dann klappt der bewegliche Teil relativ rasch in die zweite stabile Position, in der er wieder durch die Selbsthaltekräfte des Permanentmagneten fixiert bleibt. Dieses Umklappen geschieht auch bei langsamer Erhöhung der Betätigungskraft mit einer minimalen Geschwindigkeit, die durch die Dimensionierung des Magnetkreises eingestellt werden kann. Auf diese Weise wird sichergestellt, daß auch bei langsamer Betätigung hinreichend Energie zum Betrieb des Funksensors/Funkschalters gewandelt wird.

Der magnetische Fluß durch den von der Spule 6 umwickelten Teil des Magnetkreises 5 ändert beim Umklappen um eine Achse 4 oder einen Kipp-Punkt seine Richtung. Dies ist Konstruktionen vorzuziehen, in denen der magnetische Fluß lediglich unterbrochen oder geschlossen wird, da die Flußänderung hier doppelt so groß ist.

Die rasche magnetische Flußänderung führt zu einer kurzzeitigen Spannungsinduktion in der Spule, um die so erzeugte elektrische Energie kann mit Gleichrichtern, vorzugsweise Halbleiter-Metallkontakt-Dioden gleichgerichtet und nach Zwischenspeicherung in einem Kondensator zum kurzzeitigen Betrieb eines Funkschalters oder Funksensors genutzt werden. Denkbar ist auch, mehrere Spulen zu verwenden, und auf eine Gleichrichtung der Energie, die insbesondere bei kleinen Spannungen hohe Verluste erzeugt, zu verzichten.

Das Federelement 7 dient dazu, dass aus einem Umschalter mit 2 festen Positionen ein Taster wird. Dazu wird die Federkraft so dimensioniert, daß nach dem Umklappen die Federkraft ausreicht, um das bewegliche Teil wieder gegen die Haltekraft in die Anfangsposition zurückschnellen zu lassen, sobald die Betätigungskraft klein genug wird. Auf diese Weise ist eine konstruktiv einfache Realisierung eines monostabilen Schalters möglich. Hier wird erfindungsgemäß so-wohl beim Drücken als auch beim Loslassen des Schalters Energie erzeugt.

Die Polarität der erzeugten Spannung wechselt mit der Art der Betätigung. Erfindungsgemäß kann diese Polarität von der angeschlossenen Elektronik gemessen werden und die darin enthaltene Information über die Richtung des Zustandswechsels mit dem auszusendenden Funksignal übertragen werden.

Die Mechanik, welche auf den beweglichen Teil des Energiewandlers einwirkt, hat zumindest eine Betätigungseinrichtung, wie z.B. eine Tasterfläche. Erfindungsgemäß können auch mehrere Betätigungseinrichtungen auf den einen Energiewandler in der gleichen Weise einwirken, wenn Funkschalter mit mehreren Kanälen realisiert werden sollen. In diesem Fall wird durch eine hinreichende Anzahl von Sensoren, z.B. einen Sensor pro Betätigungseinrichtung, sichergestellt, daß die jeweils aktivierte Betätigungseinrichtung von der angeschlossenen Elektronik ermittelt wird. Die Information wird dann in das zu übertragende Funktelegramm eingebracht.

Der mit dem Energiewandler betreibbare Funksender besitzt mindestens eine Betätigungseinrichtung, welches auf den Energiewandler mechanisch einwirkt. Besitzt er mehrere Betätigungseinrichtungen, wirken diese alle auf den einen Energiewandler und zusätzlich auf eine geeignete Anzahl Sensoren zur Detektion der jeweils aktivierten Betätigungseinrichtung. Die Informationen über die Identität des Betätigungsfeldes kann somit in das auszusendende Funksignal eingebracht werden.

Die Information über die Art der Betätigung (Drücken oder Loslassen bei Tastschaltern bzw. Drücken an verschiedenen Betätigungsflächen bei Kippschaltern) kann über die Polarität der erzeugten Spannung sensiert werden und ebenfalls mit dem Funksignal übertragen werden.

### Bezugszeichenliste

- 1: Permanentmagnet
- 2: erste Permanentmagnetschicht
- 3: zweite Permanentmagnetschicht
- 4: Achse
- 5: bewegliches Element
- 6: elektrische Spule
- 7: Federelement
- 8, 8a, 8b, 8c, 8d: Anschlagstellen
- 9: weichmagnetisches Element

## Patentansprüche

1. Anordnung mit:
einem elektromagnetischen Energiewandler mit zumindest
- einem Permanentmagneten (1),
- einem weichmagnetischem Element (9), und
- einer elektrischen Spule (6),
wobei durch den Permanentmagnet (1) und das
weichmagnetische
Element (9) ein magnetischer Kreis mit einer ersten Flussrichtung gebildet ist und die Spule einen Teil des magnetischen Kreises umschließt, wobei das weichmagnetische Element (9) und der Permanentmagnet (1) um eine Achse (4) zueinander drehbar gelagert sind und durch Anschlagstellen (8a-8d) Endpunkte einer damit möglichen Drehbewegung gebildet sind,
**dadurch gekennzeichnet, dass** die Anordnung einen Funksignalgeber aufweist, wobei
der elektromagnetische Wandler den Funksignalgeber, mit elektrischer Energie versorgt.

2. Anordnung nach Patentanspruch 1, **dadurch gekennzeichnet, dass** eine, in einer Betätigungsrichtung entgegen einer magnetischen Haltekraft, auf den elektromagnetischen Energiewandler eingebrachte Kraft, beim Überschreiten der magnetischen Haltekraft die Drehbewegung auslöst.

3. Anordnung nach Patentanspruch 1, **dadurch gekennzeichnet, dass**
die Anschlagstellen (8a-8d) durch Kontaktflächen mit dem Permanentmagnet (1) und dem weichmagnetischem Element (9) gebildet sind.

4. Anordnung nach einem der vorhergehenden Patentansprüche, **dadurch gekennzeichnet, dass**
eine erste und eine zweite Endlage der Drehbewegung gebildet ist.

5. Anordnung nach einem der vorhergehenden Patentansprüche, **dadurch gekennzeichnet, dass**
das durch magnetische Selbsthaltekräfte in der ersten oder zweiten Endlage eine stabile erste oder zweite Ruhelage gebildet ist.

6. Anordnung nach einem der vorhergehenden Patentansprüche, **dadurch gekennzeichnet, dass**
die Drehbewegung einen Winkel beschreibt, der kleiner ist als 90°.

7. Anordnung nach einem der vorhergehenden Patentansprüche, **dadurch gekennzeichnet, dass**
ein Federelement (7) eine Kraft auf den Permanentmagneten (1) und/oder das weichmagnetische Element (9) in Richtung der ersten Endlage der Drehbewegung ausübt.

8. Anordnung nach Patentanspruch 7,
**dadurch gekennzeichnet, daß**
das Federelement (7) so gestaltet ist, daß eine Drehbewegung aus der ersten Ruhelage oder der zweiten Ruhelage heraus, durch die Kraft des Federelements (7) unterstützt wird.

9. Anordnung nach einem der Patentansprüche 7 - 8,
**dadurch gekennzeichnet, dass**
die durch das Federelement (7) ausgeübte Kraft so dimensioniert ist, dass die zweite Ruhelage instabil gestaltet wird, so dass nach einer Drehbewegung in die zweite Ruhelage eine durch das Federelement (7) ausgelöste Drehbewegung zurück in die erste Ruhelage erfolgt.

10. Anordnung nach einem der vorhergehenden Patentansprüche, **dadurch gekennzeichnet, dass**
sich alle auf den Permanentmagneten (1) und/oder das weichmagnetische Element (9) wirkenden Kräfte, wie zum Beispiel die Federkraft und/oder die magnetische Kraft, in einer Mittelstellung der Drehbewegung gegenseitig aufheben, bis durch eine zusätzliche Kraft, zum Beispiel durch manuelle Betätigung, die Drehbewegung eingeleitet ist.

11. Anordnung nach einem der vorhergehenden Patentansprüche, **dadurch gekennzeichnet, dass**
der Permanentmagnet (1) so gestaltet ist, das sich die magnetischen Nord- und Südpole jeweils an den Enden des weichmagnetischem Elementes (9) gegenüber befinden, und damit zugleich Anschlagstellen (8a-8d) bilden.

12. Anordnung nach einem der vorhergehenden Patentansprüche, **dadurch gekennzeichnet, dass**
der Permanentmagnet (1) schichtweise aus zwei gegenläufig magnetisierten Permanentmagneten (2, 3) gebildet ist, wobei die magnetischen Pole der einzelnen Permanentmagnetschichten (2, 3) jeweils die Anschlagstellen (8a-8d) bilden.

13. Anordnung nach einem der vorhergehenden Patentansprüche, **dadurch gekennzeichnet, dass**
das weichmagnetische Material Eisen, Ferrit, oder eine Nickel-Eisen-Legierung ist, oder aus sogenannten Elektro- oder Trafoblechen besteht.

14. Anordnung nach einem der vorhergehenden Patentansprüche, **dadurch gekennzeichnet, dass**
der Funksignalgeber einen Funkschalter ansteuert.

## Claims

1. A device, comprising:
an electromagnetic energy transducer comprising at least
- a permanent magnet (1),
- a soft-magnetic element (9), and
- an electric coil (6),
wherein the permanent magnet (1) and the soft-magnetic element (9) form a magnetic circuit having a first flux direction and the coil surrounds a part of the magnetic circuit, the soft-magnetic element (9) and the permanent magnet (1) being mounted on a shaft (4) so as to be rotatable relative to each other, and end points of a rotary motion thus made possible being formed by stop points (8a-8d),
**characterized in that** the device comprises a radio signal transmitter, the electromagnetic energy transducer supplying the radio signal transmitter with electrical energy.

2. The device according to claim 1, **characterized in that** a force applied to the electromagnetic energy transducer in a direction of actuation which is opposite to a magnetic holding force initiates the rotary motion when it exceeds the magnetic holding force.

3. The device according to claim 1, **characterized in that** the stop points (8a-8d) are formed by areas of contact with the permanent magnet (1) and the soft-magnetic element (9).

4. The device according to any of the preceding claims, **characterized in that**
first and second end positions of the rotary motion are established.

5. The device according to any of the preceding claims, **characterized in that**
a stable first or second rest position is formed by magnetic self-latching forces in the first or second end position.

6. The device according to any of the preceding claims, **characterized in that**
the rotary motion describes an angle of less than 90°.

7. The device according to any of the preceding claims, **characterized in that**
a spring element (7) exerts a force on the permanent magnet (1) and/or the soft-magnetic element (9) towards the first end position of the rotary motion.

8. The device according to claim 7,
**characterized in that**
the spring element (7) is designed such that a rotary motion starting from the first or second rest position is assisted by the force of the spring element (7).

9. The device according to any of the claims 7 to 8, **characterized in that**
the force exerted by the spring element (7) is dimensioned such that the second rest position is designed so as to be instable so that after a rotary motion into the second rest position a rotary motion caused by the spring element (7) takes place so as to return to the first rest position.

10. The device according to any of the preceding claims, **characterized in that**
all forces acting on the permanent magnet (1) and/or the soft-magnetic element (9), such as the spring force and/or the magnetic force, neutralize each other in a center position of the rotary motion until the rotary motion is initiated by an additional force, for instance by manual operation.

11. The device according to any of the preceding claims, **characterized in that**
the permanent magnet (1) is designed such that the magnetic north and south poles are each opposed at the ends of the soft-magnetic element (9), thus forming stop points (8a-8d) at the same time.

12. The device according to any of the preceding claims, **characterized in that**
the permanent magnet (1) is formed in layers from two oppositely magnetized permanent magnets (2, 3), the magnetic poles of the individual permanent magnet layers (2, 3) forming the stop points (8a-8d) in each case.

13. The device according to any of the preceding claims, **characterized in that**
the soft-magnetic material is iron, ferrite or a nickel/iron alloy, or is made from so-called electrical or transformer steel sheets.

14. The device according to any of the preceding claims, **characterized in that**
the radio signal transmitter drives a radio switch.

## Revendications

1. Montage comportant :
un convertisseur d'énergie électromagnétique comportant au moins :
- un aimant permanent (1),
- un élément magnétique doux (9), et
- une bobine électrique (6),
un circuit magnétique présentant un premier sens d'écoulement étant formé par l'aimant permanent (1) et
l'élément magnétique doux (9), et la bobine entourant une partie du circuit magnétique, l'élément magnétique doux (9) et l'aimant permanent (1) étant logés en rotation autour d'un axe (4) l'un par rapport à l'autre et des points finaux d'un mouvement de rotation ainsi possible étant formés par des butées (8a-8d),
**caractérisé en ce que**
le montage présente un émetteur de signal radio, le convertisseur électromagnétique alimentant l'émetteur de signal radio en énergie électrique.

2. Montage selon la revendication 1,
**caractérisé en ce que**
une force exercée sur le convertisseur d'énergie électromagnétique dans un sens d'actionnement contraire à une force de maintien magnétique déclenche le mouvement de rotation quand elle dépasse la force de maintien magnétique.

3. Montage selon la revendication 1,
**caractérisé en ce que**
les butées (8a-8d) sont formées par des surfaces de contact avec l'aimant permanent (1) et l'élément magnétique doux (9).

4. Montage selon l'une des revendications précédentes, **caractérisé en ce que**
une première et une deuxième position finale du mouvement de rotation sont formées.

5. Montage selon l'une des revendications précédentes, **caractérisé en ce que**
une première ou une deuxième position de repos stable est formée par des forces magnétiques d'auto-maintien dans la première ou deuxième position finale.

6. Montage selon l'une des revendications précédentes, **caractérisé en ce que**
le mouvement de rotation décrit un angle inférieur à 90°.

7. Montage selon l'une des revendications précédentes, **caractérisé en ce que**
un élément ressort (7) exerce une force sur l'aimant permanent (1) et/ou sur l'élément magnétique doux (9) en direction de la première position finale du mouvement de rotation.

8. Montage selon la revendication 7,
**caractérisé en ce que**
l'élément ressort (7) est conçu de façon qu'un mouvement de rotation partant de la première position de repos ou de la deuxième position de repos est assisté par la force de l'élément ressort (7).

9. Montage selon l'une des revendications 7 à 8, **caractérisé en ce que**
la force exercée par l'élément ressort (7) est dimensionnée de façon que la deuxième position de repos est conçue de manière instable de sorte que, après un mouvement de rotation vers la deuxième position de repos, un mouvement de rotation déclenché par l'élément ressort (7) s'opère en retour vers la première position de repos.

10. Montage selon l'une des revendications précédentes, **caractérisé en ce que**
toutes les forces qui agissent sur l'aimant permanent (1) et/ou sur l'élément magnétique doux (9), par exemple la force de ressort et/ou la force magnétique, s'annulent mutuellement dans une position médiane du mouvement de rotation jusqu'à ce que le mouvement de rotation soit enclenché par une force supplémentaire, par exemple par actionnement manuel.

11. Montage selon l'une des revendications précédentes, **caractérisé en ce que**
l'aimant permanent (1) est conçu de façon que les pôles magnétiques nord et sud se trouvent à l'opposé respectivement aux extrémités de l'élément magnétique doux (9), et forment ainsi à la fois des butées (8a-8d).

12. Montage selon l'une des revendications précédentes, **caractérisé en ce que**
l'aimant permanent (1) est formé par couches de deux aimants permanents (2, 3) magnétisés en sens opposé, les pôles magnétiques des différentes couches d'aimant permanent (2, 3) formant respectivement les butées (8a-8d).

13. Montage selon l'une des revendications précédentes, **caractérisé en ce que**
le matériau magnétique doux est du fer, du ferrite, ou un alliage nickel-fer, ou se compose de ce qu'on appelle des tôles électriques ou tôles pour transformateurs.

14. Montage selon l'une des revendications précédentes, **caractérisé en ce que**
l'émetteur de signal radio commande un commutateur radio.
